# EUROPÄISCHE PATENTSCHRIFT

(11) **EP 2 910 398 B1**
(45) Veröffentlichungstag und Bekanntmachung des Hinweises auf die Patenterteilung: **04.10.2017**
(21) Anmeldenummer: 14156112.6
(22) Anmeldetag: 21.02.2014
(51) Int. Cl.: B60L 1/00, F16H 57/02

(54) **Maschine mit einem Antriebsstrang**
Machine with a drive train
Machine à entraînement par chaîne

(43) Veröffentlichungstag der Anmeldung: 26.08.2015
(73) Patentinhaber: Siemens Aktiengesellschaft, 80333 München (DE)
(72) Erfinder: Reimers, Jan-Dirk, 52074 Aachen (DE); Rohde, Joachim, 52070 Aachen (DE)

(56) Entgegenhaltungen:
- WO-A2-2013/127535
- DE-A1-102010 002 494
- US-A- 2 896 732

## Beschreibung

Die vorliegende Erfindung betrifft eine Maschine mit einem Antriebsstrang, der eine Antriebseinheit, eine Abtriebseinheit und ein die Antriebseinheit und die Abtriebseinheit miteinander verbindendes Getriebe aufweist, wobei die Verbindung zwischen dem Getriebe und der Antriebseinheit und/oder die Verbindung zwischen dem Getriebe und der Abtriebseinheit elektrisch isoliert ist. Ferner betrifft die Erfindung ein Verfahren zum Betreiben einer solchen Maschine.

Maschinen der genannten Art sind im Stand der Technik in unterschiedlichen Ausgestaltungen bekannt. Die tribologisch beanspruchten Komponenten ihrer Getriebe, insbesondere in Form von Verzahnungen und Wälzlagern, unterliegen während des Maschinenbetriebs hohen Beanspruchungen, die zu unterschiedlichen Arten von Schädigungen führen. Derartigen Schädigungen kann zum einen durch eine entsprechende Auslegung der Getriebekomponenten entgegengewirkt werden, die auf eine geeignete Wahl der Bauteilabmessungen, der Bauteilgeometrie, des Bauteilmaterials und der Gefügeeigenschaften gerichtet ist, um nur einige Beispiele zu nennen. Zum anderen kann die Schmiermittelzusammensetzung variiert werden. So kann beispielsweise die Alterung durch die Zugabe von Additiven hinausgezögert werden, was einem frühzeitigen Verschleiß tribologisch beanspruchter Oberflächen entgegenwirkt. Ferner ist es bekannt, einzelne Getriebebauteile elektrisch zu isolieren, wie beispielsweise die Lagerungen, um im Falle großer Potentialunterschiede zwischen den Bauteilen die Entstehung von Lichtbögen zu verhindern, welche Schäden verursachen können.

Im Ergebnis ist festzuhalten, dass bereits unterschiedliche verschleißhemmende Maßnahmen für tribologisch beanspruchte Bauteile eines Getriebes bekannt sind. Dennoch ist es wünschenswert, den Verschleiß weiter zur reduzieren und damit die Lebensdauer der entsprechenden Getriebekomponenten zu verlängern.

Ausgehend von diesem Stand der Technik ist es eine Aufgabe der vorliegenden Erfindung, eine Maschine sowie ein Verfahren der eingangs genannten Art zu schaffen, mit denen Schädigungen von tribologisch beanspruchten Bauteilen eines Getriebes effektiv, einfach und preiswert reduziert werden.

Weitere einen Antriebsstrang aufweisende Maschinen sind in den Druckschriften US 2 896 732 A, dass den nächstliegenden Stand der Technik repräsentiert, und WO 2013/127535 A2 offenbart.

Zur Lösung dieser Aufgabe schafft die vorliegende Erfindung eine Maschine der eingangs genannten Art, die erfindungsgemäß dadurch gekennzeichnet ist, dass das Getriebe derart ausgebildet ist, dass es während des Normalbetriebs der Maschine gegenüber der Maschinenumgebung, insbesondere zum Untergrund, nicht geerdet ist. Mit anderen Worten besteht der Kerngedanke der vorliegenden Erfindung darin, eine Maschine vorzusehen, bei deren Getriebe auf Mittel verzichtet wird, die zum Personenschutz eine Spannung kurzschließen. Sehr hochohmige elektrische Verbindungen zwischen dem Getriebe und der Umgebung werden somit also nicht als Erdung angesehen. Die Erfinder haben festgestellt, dass die Diffusion von Wasserstoff in tribologisch beanspruchte Oberflächen, die durch elektrische Potentialdifferenzen zwischen Oberflächen und den damit einhergehenden Stromfluss hervorgerufen wird, einen wesentlichen Einfluss auf die Schadensentwicklung hat. Der sich durch die fehlende Erdung des erfindungsgemäßen Getriebes ergebende Vorteil besteht darin, dass sich sämtliche Getriebekomponenten stets auf einem einheitlichen, sich selbsttätig aufbauenden Potential befinden, weshalb zwischen den Getriebekomponenten ein eine Wasserstoffdiffusion und die damit einhergehenden Beschädigungen hervorrufender Stromfluss einfach und preiswert vermieden wird.

Gemäß einer Ausgestaltung der vorliegenden Erfindung weist das Getriebe ein mit diesem verbundenes Peripheriegerät auf, wie beispielsweise eine Ölanlage, Sensoren, Heizpatronen oder dergleichen, das ebenfalls derart ausgebildet ist, dass es während des Normalbetriebs der Maschine gegenüber der Maschinenumgebung elektrisch isoliert und somit ungeerdet sind.

Erfindungsgemäß weist das Getriebe eine Sicherheitseinrichtung auf, die derart eingerichtet ist, dass sie das Getriebe im Gefahrenfall automatisch erdet, beispielsweise dann, wenn die Präsenz einer Person innerhalb eines vorbestimmten Schutzbereiches detektiert wird. Sobald das Getriebe geerdet ist, besteht für die Person im Falle eines Kontaktes mit dem Getriebe keine Gefahr mehr. Die Detektierung einer Personenpräsenz kann unter Einsatz bekannter Mittel erfolgen, wie beispielsweise unter Verwendung von Lichtschranken, unter Verwendung von in Zugangstüren integrierten Schaltern oder dergleichen.

Gemäß einer Ausführungsform der vorliegenden Erfindung weist das Getriebe elektrisch isolierte Lagerungen auf, um Kreisströme zu vermeiden, insbesondere für den Fall, dass die Maschine nach der Noterdung des Getriebes weiterbetrieben wird.

Gemäß einer weiteren Ausgestaltung der vorliegenden Erfindung weist das Getriebe eine aktive Potentialkompensationseinrichtung auf, mit der das Potential des Getriebes aktiv gesteuert werden kann, insbesondere für den Fall, dass die Maschine nach einer Noterdung des Getriebes weiterbetrieben wird. Aktive Potentialkompensationseinrichtungen der genannten Art sind im Stand der Technik grundsätzlich bekannt. In diesem Zusammenhang wird beispielhaft auf die DE 10 2010 002 494 A1 verwiesen.

Zur Lösung der eingangs genannten Aufgabe schafft die vorliegende Erfindung ferner ein Verfahren zum Betreiben einer Maschine mit einem Antriebsstrang, der eine Antriebseinheit, eine Abtriebseinheit und ein die Antriebseinheit und die Abtriebseinheit miteinander verbindendes Getriebe aufweist, insbesondere zum Betreiben einer Maschine der erfindungsgemäßen Art, wobei das Verfahren dadurch gekennzeichnet ist, dass das Getriebe während des Normalbetriebs der Maschine ungeerdet ist.

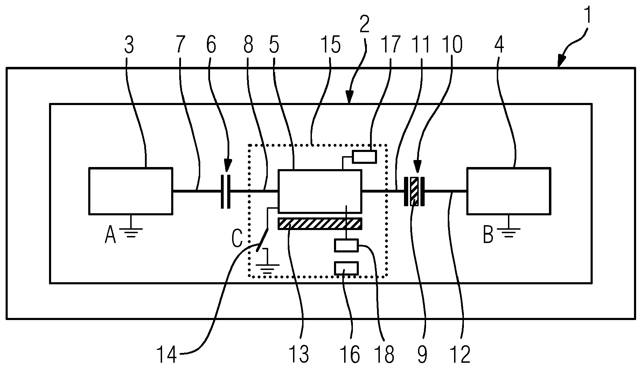

Weitere Merkmale und Vorteile der vorliegenden Erfindung werden anhand der nachfolgenden Beschreibung einer Ausführungsform einer erfindungsgemäßen Maschine unter Bezugnahme auf die beiliegende Zeichnung deutlich, bei der es sich um eine schematische Ansicht handelt.

Die in der Zeichnung dargestellte Maschine 1 umfasst einen Antriebsstrang 2, der durch eine Antriebseinheit 3, beispielsweise in Form eines Motors oder dergleichen, eine Abtriebseinheit 4 und ein die Antriebseinheit 3 und die Abtriebseinheit 4 miteinander verbindendes Getriebe 5 gebildet wird. Bei der Verbindung zwischen der Antriebseinheit 3 und dem Getriebe 5 handelt es sich vorliegend um eine Flanschverbindung 6, welche eine Ausgangswelle 7 der Antriebseinheit 3 mit einer Eingangswelle 8 des Getriebes 5 verbindet, wobei natürlich auch andere Verbindungen denkbar sind. So können die Ausgangswelle 7 und die Eingangswelle 8 beispielsweise auch einteilig ausgebildet sein. Die Verbindung zwischen dem Getriebe 5 und der Abtriebseinheit 4 wird durch eine mit einer elektrischen Isolierung 9 versehene Flanschverbindung 10 definiert, welche eine Ausgangswelle 11 des Getriebes 5 mit einer Eingangswelle 12 der Abtriebseinheit 4 verbindet. Die Antriebseinheit 3 und die Abtriebseinheit 4 sind an den Punkten A und B geerdet und stehen somit in elektrischer Verbindung mit der Maschinenumgebung, beispielsweise mit einem Untergrund, auf dem sie aufgestellt sind. Das Getriebe 5 hingegen ist gegenüber der Maschinenumgebung durch eine elektrische Isolierung 13 isoliert. Am Punkt C ist das Getriebe 5 geerdet, wobei die Erdung durch Umlegen eines Schalters 14 gezielt ausgeschaltet werden kann. Dabei stellt der in der Zeichnung dargestellte ungeerdete Zustand des Getriebes 5 denjenigen Zustand dar, der während des Normalbetriebs der Maschine 1 vorliegt. Zumindest das Getriebe 5 ist in einem Schutzraum 15 angeordnet, der vorliegend durch eine gepunktete Linie dargestellt ist und dazu dient, einen versehentlichen Kontakt einer Person mit dem Getriebe 5 im ungeerdeten Zustand zu verhindern. Der Schutzraum 15 ist mit einer Sicherheitseinrichtung 16 versehen, die derart ausgebildet ist, dass sie den Schalter 14 automatisch umlegt, sobald eine Person den Schutzraum 15 betritt, so dass das Getriebe 5 aus dem ungeerdeten Zustand in den geerdeten Zustand überführt wird. Das Betreten des Schutzraums 15 kann beispielsweise durch eine geeignete Detektierungseinrichtung erfasst werden, welche die Präsenz der Person im Eingangsbereich des Schutzraums 15 erfasst, wie beispielsweise eine Lichtschranke, einen Sensor, einen Schalter, der beim Öffnen des Zugangs betätigt wird, oder dergleichen. Das Getriebe 5 weist weiteres Peripheriegerät 17 auf, das derart ausgebildet ist, dass es während des Normalbetriebs der Maschine 1 gegenüber der Maschinenumgebung elektrisch isoliert sind. Das Peripheriegerät 17 kann beispielsweise eine Ölanlage, Sensoren, Heizpatronen oder dergleichen umfassen. Da derartiges Peripheriegerät 17 im Stand der Technik hinreichend bekannt sind, soll hierauf nicht näher eingegangen werden. Darüber hinaus ist das Getriebe 5 mit einer aktiven Potentialkompensationseinrichtung 18, die derart ausgebildet ist, dass mit ihr das Potential des Getriebes 5 aktiv gesteuert, also die am Getriebe 5 anliegende Spannung erhöht oder verringert werden kann. Bei der Potentialkompensationseinrichtung 18 kann es sich beispielsweise um eine solche handeln, wie sie in der DE 10 2010 002 494 A1 offenbart ist. Auch wenn es in der Zeichnung nicht dargestellt ist, sind die Lagerungen des Getriebes elektrisch gegenüber den benachbart angeordneten Getriebekomponenten isoliert.

Während des Normalbetriebs der Maschine 1 ist das Getriebe 5, wie es in der Zeichnung dargestellt ist, bei geöffnetem Schalter 14 ungeerdet. Ferner ist das Getriebe 5 durch die elektrische Isolierung 9 gegenüber der Abtriebseinheit 4 elektrisch isoliert, ebenso wie durch die elektrische Isolierung 13 gegenüber der Maschinenumgebung. Das Getriebe 5 ist somit lediglich mit der geerdeten Antriebseinheit 3 verbunden, so dass sich das elektrische Potential des Getriebes 5 automatisch an das elektrische Potential der Antriebseinheit 3 angleicht und umgekehrt. Die Komponenten des Getriebes 5 weisen dabei stets ein einheitliches Potential auf, weshalb zwischen diesen kein Stromfluss stattfindet. Entsprechend wird eine zu Beschädigungen führende Wasserstoffdiffusion sicher verhindert.

Aufgrund der Tatsache, dass das Getriebe 5 bei geöffnetem Schalter 14 ungeerdet ist und damit eine große Gefahrenquelle darstellt, ist der Schutzraum 15 vorgesehen, der das Getriebe 5 abschirmt und entsprechend verhindert, dass während des Normalbetriebs der Maschine 1 Personen mit dem Getriebe 5 in Kontakt kommen können. Sobald eine Person den Schutzraum 15 betritt, wird ihre Präsenz durch die Sicherheitseinrichtung 16 erfasst, woraufhin der Schalter 14 automatisch umgelegt und das Getriebe 5 geerdet wird. In diesem Zustand kann die Person das Getriebe 5 gefahrlos berühren.

Sobald das Getriebe 5 in der zuvor beschriebenen Weise notgeerdet wurde, treten zwischen den Getriebekomponenten Potentialdifferenzen auf, weshalb eine Wasserstoffdiffusion stattfinden kann. Um der Wasserstoffdiffusion in diesem notgeerdeten Zustand entgegenzuwirken, ist die aktive Potentialkompensationseinrichtung 18 vorgesehen, welche die vorhandenen Potentialdifferenzen zumindest verringert. Die elektrische Isolierung der Lagerungen des Getriebes 5 verhindert im geerdeten Getriebezustand die Entstehung von Kreisströmen.

Dank des erfindungsgemäßen Aufbaus des Antriebsstrangs 2 der Maschine 1 wird Beschädigungen von tribologisch beanspruchten Getriebekomponenten, die durch Wasserstoffdiffusion verursacht werden, effektiv, einfach und preiswert entgegengewirkt.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Maschine (1) mit einem Antriebsstrang (2), der eine Antriebseinheit (3), eine Abtriebseinheit (4) und ein die Antriebseinheit (3) und die Abtriebseinheit (4) miteinander verbindendes Getriebe (5) aufweist, wobei die Verbindung zwischen dem Getriebe (5) und der Antriebseinheit (3) und/oder die Verbindung zwischen dem Getriebe (5) und der Abtriebseinheit (4) elektrisch isoliert ist, **dadurch gekennzeichnet, dass** das Getriebe (5) derart ausgebildet ist, dass es während des Normalbetriebs der Maschine (1) gegenüber der Maschinenumgebung nicht geerdet ist, und dass das Getriebe (5) eine Sicherheitseinrichtung (16) aufweist, die derart eingerichtet ist, dass sie das Getriebe (5) im Gefahrenfall automatisch erdet.

2. Maschine (1) nach Anspruch 1, **dadurch gekennzeichnet, dass** das Getriebe (5) ein mit diesem verbundenes Peripheriegerät (17), aufweist, das derart ausgebildet ist, dass es während des Normalbetriebs der Maschine (1) gegenüber der Maschinenumgebung elektrisch isoliert ist.

3. Maschine (1) nach einem der vorhergehenden Ansprüche, **dadurch gekennzeichnet, dass** das Getriebe (5) elektrisch isolierte Lagerungen aufweist.

4. Maschine (1) nach einem der vorhergehenden Ansprüche, **dadurch gekennzeichnet, dass** das Getriebe (5) eine aktive Potentialkompensationseinrichtung (18) aufweist.

5. Verfahren zum Betreiben einer Maschine (1) nach einem der vorhergehenden Ansprüche, **dadurch gekennzeichnet, dass** das Getriebe während des Normalbetriebs der Maschine ungeerdet ist.

## Claims

1. Machine (1) with a drive train (2), which has a drive unit (3), an output unit (4) and a gear unit (5) interconnecting the drive unit (3) and the output unit (4), wherein the connection between the gear unit (5) and the drive unit (3) and/or the connection between the gear unit (5) and the output unit (4) is electrically insulated, **characterised in that** the gear unit (5) is designed such that it is not earthed in respect of the machine environment during normal operation of the machine (1), and that the gear unit (5) has a safety facility (16) which is set up such that it automatically earths the gear unit (5) in the event of danger.

2. Machine (1) according to claim 1, **characterised in that** the gear unit (5) has a peripheral device (17) connected thereto, which is designed such that it is electrically insulated in respect of the machine environment during normal operation of the machine (1).

3. Machine (1) according to one of the preceding claims, **characterised in that** the gear unit (5) has electrically insulated bearings.

4. Machine (1) according to one of the preceding claims, **characterised in that** the gear unit (5) has an active potential compensation facility (18).

5. Method for operating a machine (1) according to one of the preceding claims, **characterised in that** the gear unit is not earthed during normal operation of the machine.

## Revendications

1. Machine (1) comprenant une chaîne (2) cinématique, qui a une unité (3) d'entrée, une unité (4) de sortie et une transmission (5) reliant entre elles l'unité (3) d'entrée et l'unité (4) de sortie, la liaison entre la transmission (5) et l'unité (3) d'entrée et/ou la liaison entre la transmission (5) et l'unité (4) de sortie étant isolées électrique, **caractérisée en ce que** la transmission (5) est constituée de manière à ne pas être mise à la terre par rapport à ce qui entoure la machine pendant le fonctionnement normal de la machine (1) et **en ce que** la transmission (5) a un dispositif (6) de sécurisation conçu de manière à mettre automatiquement à la terre la transmission (5) en cas de danger.

2. Machine (1) suivant la revendication 1, **caractérisée en ce que** l'entraînement (5) a un appareil (1) périphérique, qui lui est relié et qui est constitué de manière à être isolé électriquement par rapport à ce qui entoure la machine pendant le fonctionnement normal de la machine (1).

3. Machine (1) suivant l'une des revendications précédentes, **caractérisée en ce que** la transmission (5) a des suspensions isolées électriquement.

4. Machine (1) suivant l'une des revendications précédentes, **caractérisée en ce que** la transmission (5) a un dispositif (18) actif de compensation de potentiel.

5. Procédé pour faire fonctionner une machine (1) suivant l'une des revendications précédentes, **caractérisé en ce que** la transmission n'est pas mise à la terre pendant le fonctionnement normal de la machine.
